# EUROPEAN PATENT APPLICATION

(11) **EP 4 715 742 A1**
(43) Date of publication of application: **25.03.2026**
(21) Application number: 23937428.3
(22) Date of filing: 15.05.2023
(51) Int. Cl.: G06T 7/292

(54) **ASSESSMENT METHOD, ASSESSMENT PROGRAM, AND INFORMATION PROCESSING DEVICE**

(71) Applicant: FUJITSU LIMITED, Kawasaki-shi, Kanagawa 211-8588 (JP)
(72) Inventor: MINATO, Masako, Kawasaki-shi, Kanagawa 211-8588 (JP); ABE, Narishige, Kawasaki-shi, Kanagawa 211-8588 (JP); MATSUYAMA, Yoshihiro, Kawasaki-shi, Kanagawa 211-8588 (JP)
(74) Representative: Hoffmann Eitle
(86) International application number: PCT/JP2023/018060
(87) International publication number: WO 2024/236682

(57) **Abstract**

In a determination method, a computer executes a process including, when a plurality of first images in a time series photographed by a first camera every first time and a plurality of second images in a time series photographed by a second camera every second time are acquired, calculating a trajectory of a person that is in each of the first images and a trajectory of a person that is in each of the second images, determining a third time according to a time for acquiring each of the first images from the first camera and a time for acquiring each of the second images from the second camera, and judging whether a person whose trajectory is calculated from an image of the plurality of first images corresponding to the third time after determined and a person whose trajectory is calculated from an image of the plurality of second images corresponding to the third time after determined are the same.

## Description

### TECHNICAL FIELD

The present invention relates to a determination method, a determination program and an information processing device.

### BACKGROUND ART

A technology has been disclosed in which a person is tracked using images acquired by multiple cameras and continues authentication is performed (for example, see Patent Document 1).

### CITATION LIST

### PATENT DOCUMENT

PATENT DOCUMENT 1: Japanese Patent Application Publication No. 2013-206140

### SUMMARY OF THE INVENTION

### TECHNICAL PROBLEM

For example, when tracking and authenticating a person using multiple cameras with different shooting intervals, in order to execute authentication processing using images captured by each camera at the same time, a predetermined interval is set, and tracking and authenticating the person is performed at the set interval. However, in this case, images taken at intervals shorter than the set interval will no longer be used for person tracking processing, which causes the accuracy of person tracking to deteriorate, causing the judgement accuracy of the person to be degraded.

In one aspect, the object of the present invention is to provide a determination method, a determination program, and an information processing device that can improve the judgment accuracy of a person.

### SOLUTION TO PROBLEM

In one aspect, in a determination method, a computer executes a process including: when a plurality of first images in a time series photographed by a first camera every first time and a plurality of second images in a time series photographed by a second camera every second time are acquired, calculating a trajectory of a person that is in each of the first images and a trajectory of a person that is in each of the second images; determining a third time according to a time for acquiring each of the first images from the first camera and a time for acquiring each of the second images from the second camera; and judging whether a person whose trajectory is calculated from an image of the plurality of first images corresponding to the third time after determined and a person whose trajectory is calculated from an image of the plurality of second images corresponding to the third time after determined are the same.

### ADVANTAGEOUS EFFECTS OF INVENTION

The accuracy of judgement accuracy of a person can be improved.

### BRIEF DESCRIPTION OF THE DRAWINGS

[FIG. 1] Provided is a diagram illustrating continuous authentication.
[FIG. 2] Provided is a diagram illustrating details of a Re-ID.
[FIG. 3] Provided is a diagram illustrating details of a Re-ID.
[FIG. 4] Provided is a diagram for explaining an outline of an embodiment 1.
[FIG. 5] Provided is a diagram for explaining an outline of an embodiment 1.
[FIG. 6] (a) is a block diagram illustrating an overall structure of a biometric authentication system according to an embodiment 1, and (b) is a functional block diagram of an information processing device.
[FIG. 7] Provided is a flow chart illustrating a process of a Re-ID executed by an information processing device.
[FIG. 8] Provided is a diagram illustrating determination of an execution interval for a second image processing.
[FIG. 9] Provided is a diagram illustrating an example of an image to be stored in a queue.
[FIG. 10] Provided is a diagram illustrating extraction of an image.
[FIG. 11] Provided is a block diagram illustrating a hardware configuration of an information processing device.

### DESCRIPTION OF EMBODIMENTS

Biometric authentication is a technology that uses biometric features such as fingerprints, facial features, and veins to verify a user's identity. When a user's identity is required, biometric feature data acquired by a biometric sensor is compared (matched) with pre-registered biometric feature data to determine whether the similarity exceeds a threshold for identity verification. Biometric authentication is used in a variety of fields, including bank ATMs and access control. In recent years, it has also begun to be used for cashless payments at supermarkets and convenience stores.

These biometric authentication methods are "point" authentication, performed at specific authentication spots, such as in front of an authentication device. However, with "point" authentication, the authentication state is interrupted when the user leaves the authentication spot. Therefore, when a user accesses a service or at a location where authentication is required multiple times, authentication must be repeated each time. Therefore, there is a need for continuous authentication technology that eliminates the need for repeated authentication, allowing users to continue using services with a single authentication.

Here, we will provide an overview of continuous authentication technology. Continuous authentication involves three main types of authentication:

First, there is authentication at check-in. At a gate or other location, the user performs highly accurate authentication using palm vein authentication or fingerprint authentication. After successful authentication, a camera captures the user's appearance, and the user's ID is linked to the feature information acquired by the camera.

Next is a line authentication. The authentication state is maintained by tracking the same person between multiple cameras in the authentication space and performing authentication processing. This allows individual services to be provided anywhere within the authentication space. Furthermore, since no authentication operations are required each time, the service can be provided at the optimal timing.

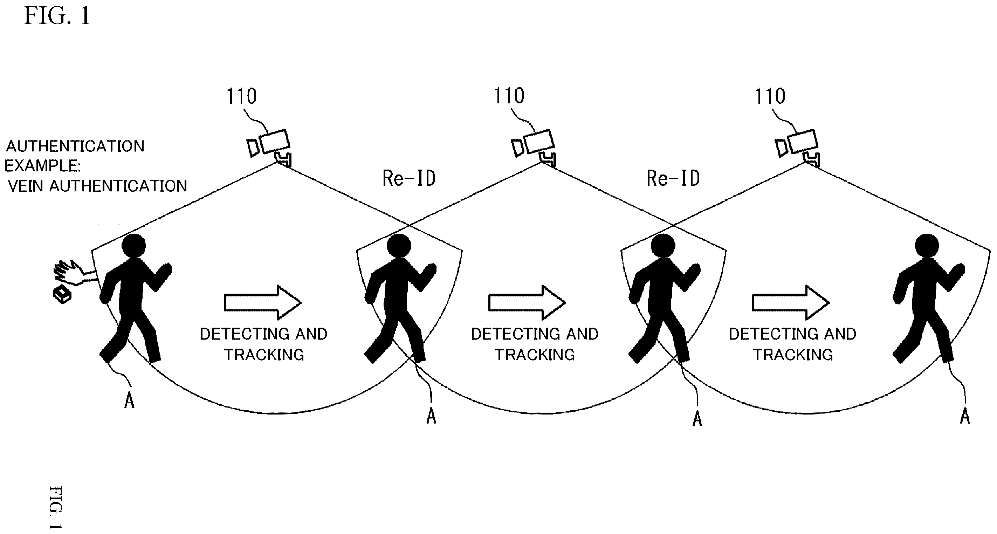

For example, as illustrated in FIG. 1, a plurality of cameras 110 are placed at different positions in the authentication space. The camera 110 acquires images in chronological order at a predetermined time interval. A person can be detected from a plurality of acquired images. Furthermore, feature information can be extracted from the detected person, and the person within the same image can be tracked, and the person can be tracked by identifying (Re-ID) between multiple images. Furthermore, by comparing the feature information of the tracked person with the registered feature information, the authentication status of the tracked person can be continued.

For example, suppose a person A moves within the authentication space. In this case, the authentication status of the person being tracked by the first camera 110 can be continued. Next, as the person A moves, the person A appears in images captured by the first camera 110 and the second camera 110. If it is determined that the person A, who is being tracked by the first camera 110 and whose authentication status is continuing, and the person A, who is being tracked by the second camera 110 and whose authentication status is continuing, are the same person, the tracking of the person A can be integrated.

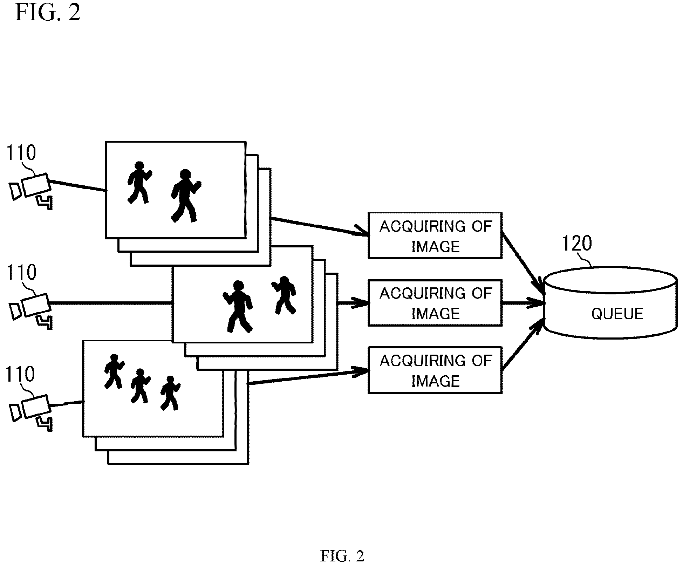

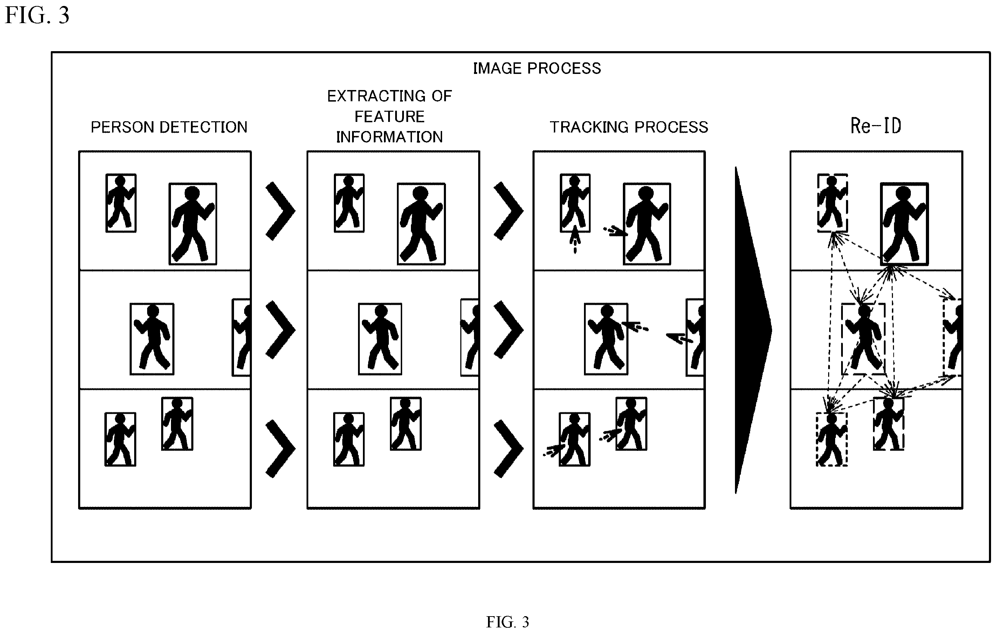

FIG. 2 and FIG. 3 are diagrams illustrating details of Re-ID. Re-ID is performed repeatedly at predetermined time intervals. As illustrated in FIG. 2, multiple images are acquired in chronological order from each of the cameras 110. For example, multiple images are acquired in chronological order within a specified time range from the start time of Re-ID. For example, images are acquired from the time range from the start time of Re-ID to the start time of the next Re-ID.

The acquired images are saved in a queue 120. Images stored during the previous Re-ID are discarded.

Next, as illustrated in FIG. 3, image processing is performed on each of the images stored in the queue 120 that were acquired from each of the cameras 110 at the same time. In other words, image processing is performed synchronously. Specifically, a person is detected, feature information is extracted from the detected person, and tracking is performed. Tracking is a tracking process that calculates the trajectory of the same person. Publicly known tracking technology can be used. If the trajectory can be calculated, each person can be continuously tracked, even if multiple people are included in a single image. For example, it is possible to track which person in the image has been identified as which person.

Next, it is determined which ID each detected person matches. In this case, it is determined that the person has the ID with the highest similarity between the feature information extracted from the image and the registered feature information. In this way, the authentication status of the tracked person can be continued.

However, the frames per second (fps) of each of the cameras 110 may differ. For example, there may be a mixture of high-fps cameras and low-fps cameras. In such cases, the arrival times of images will differ, making it difficult to determine whether each person photographed by multiple cameras and whose trajectories have been calculated is the same person at the same time.

Therefore, for example, by storing images acquired from the camera 110 in chronological order and extracting and processing the images at the lowest fps, it becomes possible to determine whether the person captured by multiple cameras and whose trajectories have been calculated are the same person. However, if image processing is performed at the low fps, the person's trajectory will be calculated at the low fps. In this case, the time interval for trajectory calculation becomes longer, resulting in reduced person tracking accuracy. Tracking accuracy decreases when multiple people appear in a single image. This is particularly true when multiple people appear in a single image and their movement directions differ. As a result, even when Re-ID is performed, the accuracy of person judgement may decrease.

Therefore, the following embodiment describes a determination method, a determination program, and an information processing device that can improve person judgement accuracy.

### [Embodiment 1]

An overview of Embodiment 1 is provided. In this embodiment, we focus on the fact that tracking processing for calculating a person's trajectory can be performed using images acquired from a single camera. In other words, we focus on the fact that tracking processing is possible without using images acquired from multiple cameras.

As an example, we will focus on two cameras. Assume that a first camera, which captures images every first time (first fps), acquires multiple first images, and a second camera, which captures images every second time (second fps), acquires multiple second images. Assume that the capture range of the first camera and the capture range of the second camera overlap at least partially. This allows the first and second cameras to capture images of the same person at the same time in the overlapping areas.

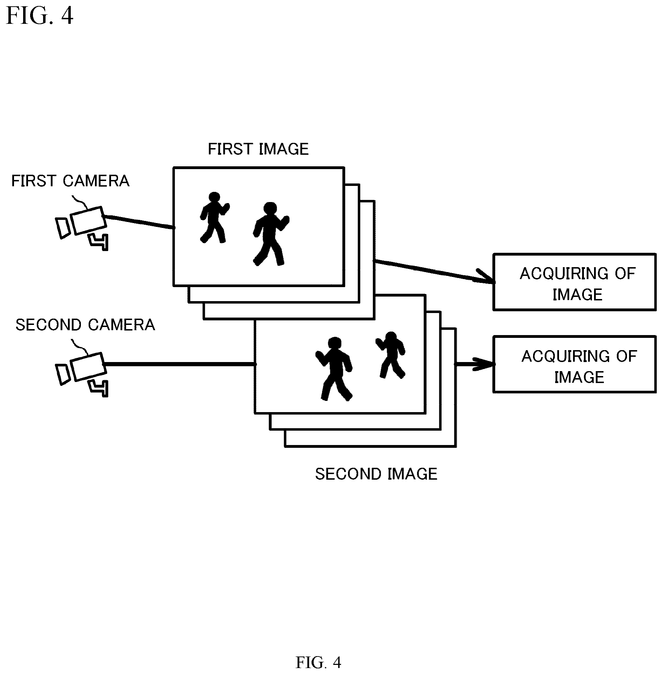

As illustrated in FIG. 4, images are acquired from the first and second cameras according to the fps of each camera. Because the fps of the first and second cameras differ, the number of images acquired from each camera per unit time differs. Next, a third time period is determined in accordance with the time required to acquire each of the first images from the first camera and the time required to acquire each of the second images from the second camera. The third time period is the execution interval for the second image processing, which will be described later.

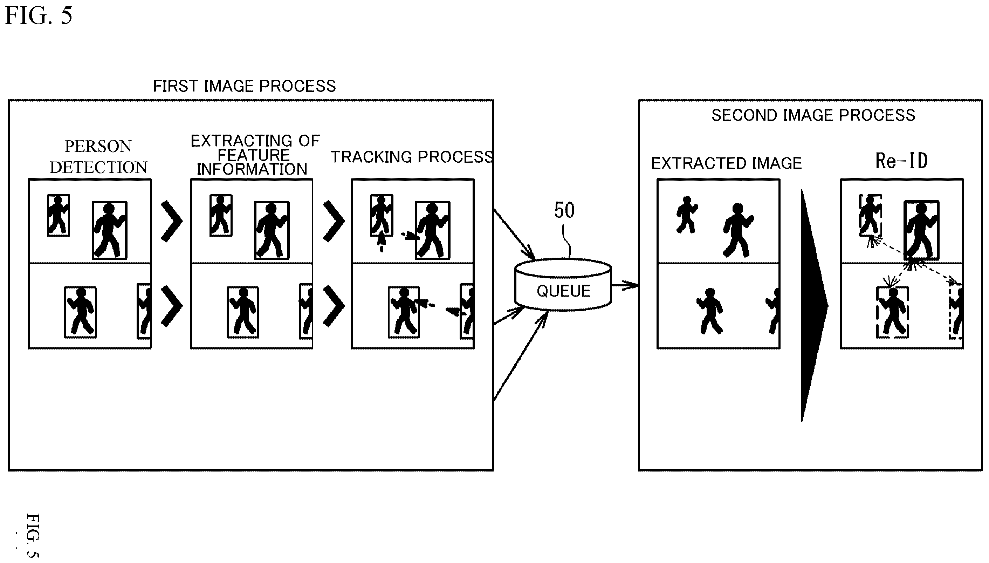

Next, as illustrated in FIG. 5, for each camera, a first image processing is performed on each acquired image. In the first image processing, a person is detected, feature information is extracted from the detected person, and tracking is performed. This allows the trajectory of the person included in the plurality of first images to be calculated, and the trajectory of the person included in the plurality of second images to be calculated. The image after the first image processing is stored in the queue 50.

Next, from the queue 50, an image corresponding to the determined third time of the plurality of first images is extracted. Furthermore, from the queue 50, an image corresponding to the determined third time among the plurality of second images is extracted. Next, a second image processing is performed on the images extracted from the queue 50. In the second image processing, it is determined whether each detected person matches the person with which ID. That is, in the second image processing, it is determined that the detected person is the person with the ID that has the highest similarity between the feature information extracted from the person and the registered feature information. This makes it possible to determine whether each person whose trajectory is calculated from each of the multiple first images and the multiple second images is the same person.

By doing this, the tracking process can be performed regardless of the third time, and the accuracy of tracking of the person can be maintained at high accuracy. Since the Re-ID is executed while maintaining high tracking accuracy, the accuracy of the person's judgment can be improved.

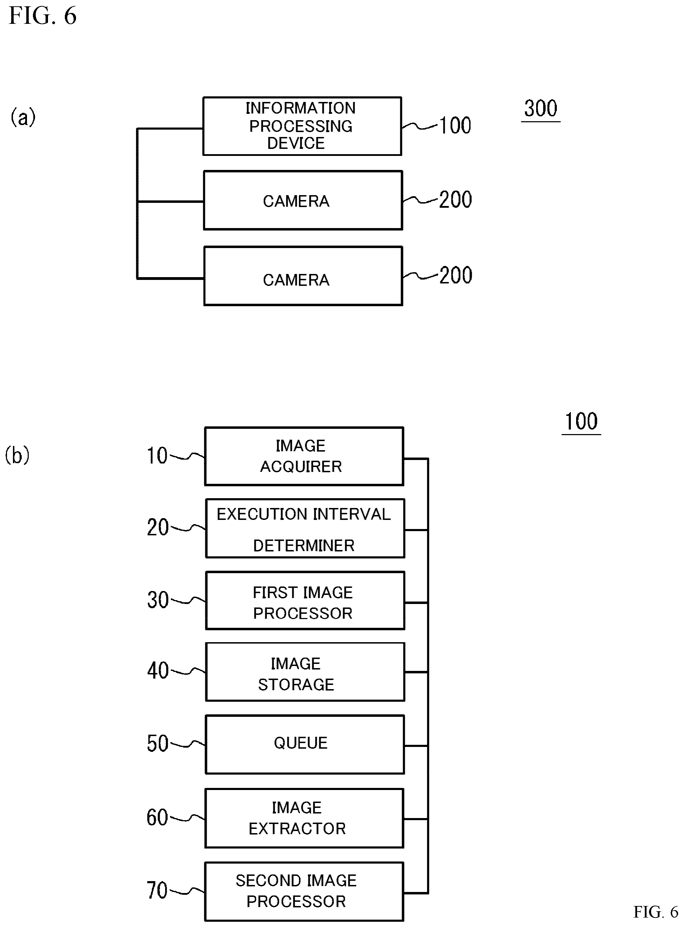

The details of this embodiment will be explained below. FIG. 6(a) is a block diagram illustrating the overall structure of a biometric authentication system 300 according to the embodiment 1. As illustrated in FIG. 6(a), the biometric authentication system 300 includes an information processing device 100, a plurality of cameras 200, and the like. These devices are connected wirelessly or wired.

The plurality of cameras 200 are cameras provided in the authentication space and are installed in a position where they can easily obtain information on the person's feature. For example, they are installed on the ceiling to make it easier to track people. Of the plurality of cameras 200, at least one of the fps may be different from the other cameras fps.

FIG. 6(b) is a functional block diagram of the information processing device 100. As illustrated in FIG. 6(b), the information processing device 100 functions as an image acquirer 10, an execution interval determiner 20, a first image processor 30, an image storage 40, the queue 50, an image extractor 60, a second image processor 70, and the like.

Next, each of the processes executed by the information processing device 100 will be described.

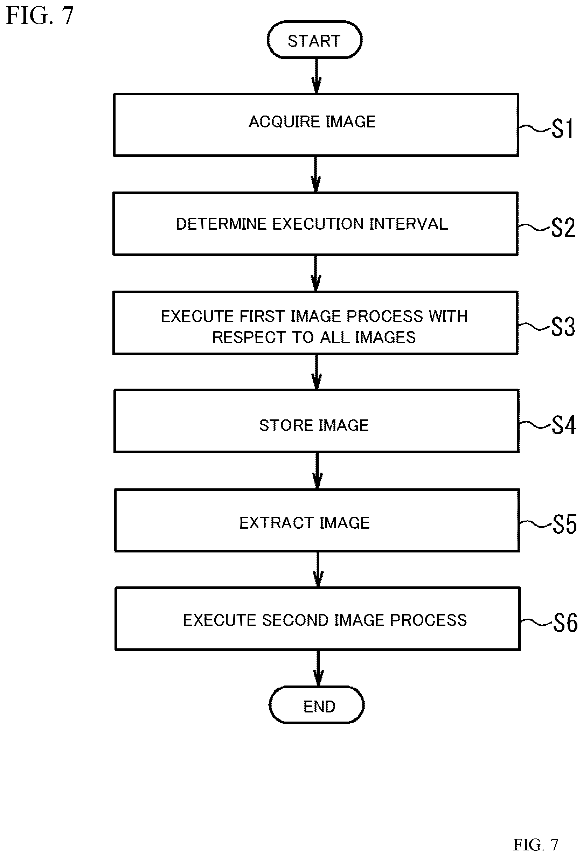

FIG. 7 is a flow chart illustrating the process of a Re-ID executed by the information processing device 100. The Re-ID is repeated at a given time interval. The authentication process will now be described with reference to the flow chart of FIG. 7.

First, the image acquirer 10 acquires a plurality of images in chronological order from each of the cameras 200 (step S1). For example, the image acquirer 10 acquires a plurality of images from each of the cameras 200 in a time series within a specified time range from the start time of the Re-ID. For example, images in the time range from the start time of the Re-ID to the start time of the next Re-ID is acquired. The image acquirer 10 may cut out images from images received from each of the cameras 200 in accordance with fps. Alternatively, each of the cameras 200 may cut out an image from the image and send it as an image to the image acquirer 10.

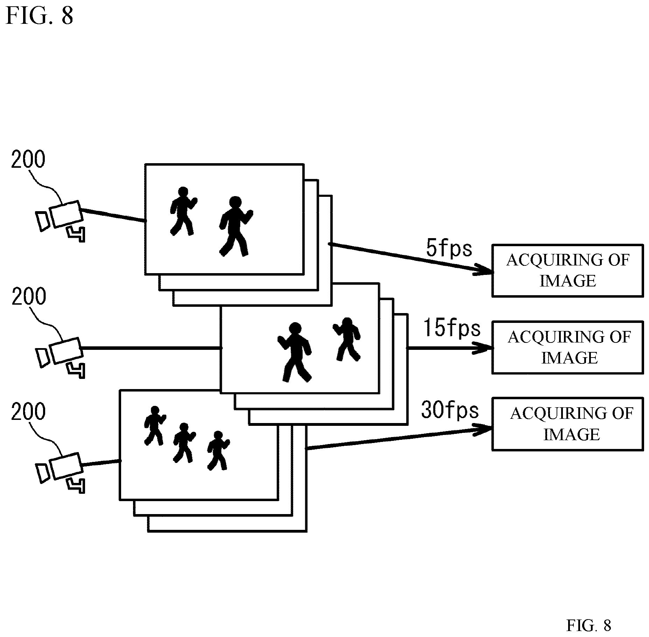

Next, the execution interval determiner 20 determines the execution interval for the second image processing in accordance with the time interval for acquiring images from each of the cameras 200 (step S2). For example, the execution interval determiner 20 determines the minimum value of the fps of each of the cameras 200 as the execution interval. Although fps may be set for the video, it may be calculated from the image generation interval, the image arrival interval, or the like. Alternatively, the fps may be determined from the performance of the camera 200 and network in the authentication space. As an example, in the example of FIG. 8, when the fps of each of the cameras 200 are 5 fps, 15 fps, and 30 fps, the minimum value of 5 fps is determined as the execution interval.

Next, the first image processor 30 executes the first image processing on all the images acquired in step S1 (step S3). By performing step S3, the trajectory of the same person can be calculated and tracked. If necessary, the processing result of step S3 may be stored in the image storage 40.

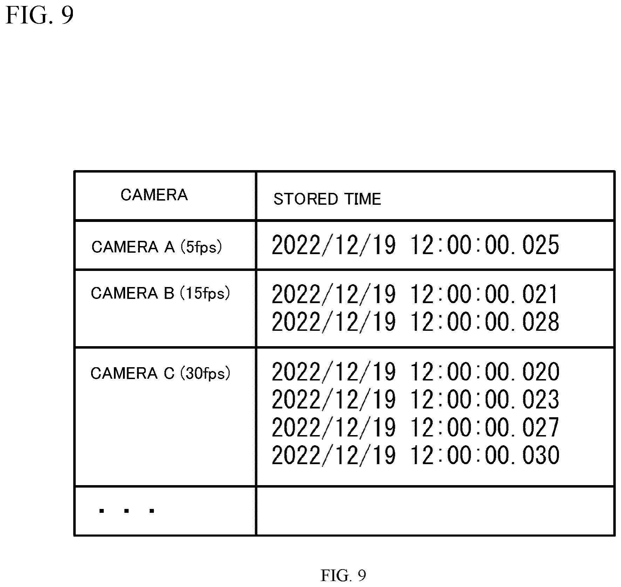

Next, the queue 50 stores the image after the first image processing is performed in step S3 (step S4). For example, as illustrated in FIG. 9, if the next image is acquired from a high fps camera before the second image processing is executed, the image stored during the previous Re-ID may be discarded or stored as past data by overwriting it with the new image. For example, for the 5fps camera A, an image at the time of 12:00:00.025 on 2022/12/19 is stored. For the 15 fps camera B, images at the time 12:00:00.021 on 2022/12/19 and 12:00:00.028 on 2022/12/19 are stored. For camera C, images are stored at times of 12:00:00.020 on 2022/12/19, 12:00:00.023 on 2022/12/19, 12:00:00.027 on 2022/12/19, and 12:00:00.030 on 2022/12/19.

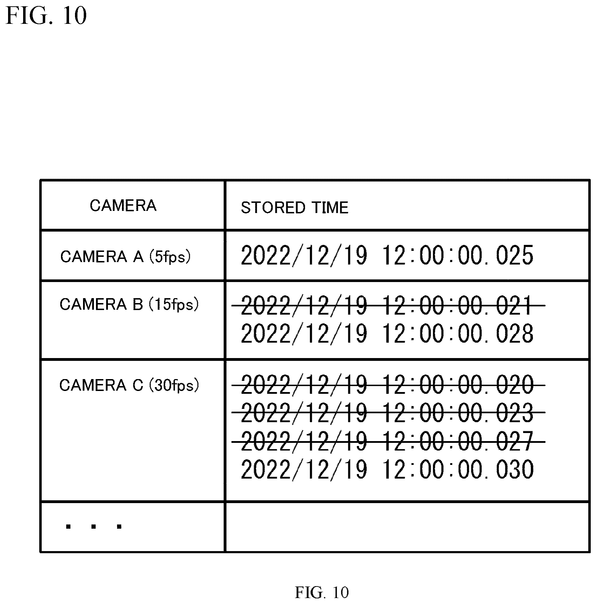

Next, the image extractor 60 extracts the image from the queue 50 at the execution interval of the second image processing determined in step S2 (step S5). For example, an image closest to the time specified in the execution interval of the second image processing may be extracted, or a latest image later than the time specified in the execution interval of the second image processing may be extracted. For example, an image is extracted as illustrated in FIG. 10. This indicates that images that were cancelled by strikethrough are not extracted. In the example of FIG. 10, an image at the time of 12:00:00.025 on 2022/12/19 is extracted from camera A. An image at the time of 12:00.028 on 2022/12/19 is extracted from camera B. An image at the time of 12:00.030 on 2022/12/19 is extracted from camera C. If there is no image to be extracted, then there is no image from the target camera. For example, for the camera 200 with a lower fps than the execution interval, there may be no images to be extracted. Furthermore, even if a delay occurs due to the influence of the network, there may be no images to be extracted.

Next, as illustrated in FIG. 7, the second image processor 70 executes the second image processing on the image extracted in step S6 (step S6). This makes it possible to determine whether each person, which has been photographed by the plurality of cameras 200 and whose trajectory is calculated, is the same person or not. Note that the second image processing may be performed using the results of the first image processing stored in the image storage 40. For example, by using the results of the first image processing stored in the image storage 40, the results of tracking the person identified by the previous Re-ID can be used.

In the above example, all images stored in the queue 50 are processed as the first image processing, but it is not necessarily necessary to perform the first image processing on all images. However, it is preferred that the execution interval for executing the first image processing be shorter than the execution interval for the second image processing. For example, when an image is acquired at 30 fps, the execution interval for the second image processing may be set to 5 fps, and the execution interval for the first image processing may be set to 10 fps, which is shorter than the execution interval for the second image processing.

Additionally, the execution interval for performing the first image processing for each camera may be changed. For example, in places near entrances and exits where there are a lot of people moving, it is difficult to maintain high accuracy of tracking people. Therefore, for the camera installed at the location, it is possible to consider that the execution interval for the first image processing is set to a high fps such as 30 fps.

Alternatively, the execution interval for performing the first image processing may be changed depending on the situation of the acquired image. For example, it is possible to perform person detection on the acquired image, and the larger the number of people detected, the shorter the execution interval for performing the first image processing is made.

In the above example, the latest image from each camera stored is extracted and processed as the second image processing, but images with a close acquisition timing may be selected and extracted and processed. In this case, past images may be left behind from the time of extraction by the image acquirer 10 until processing is performed.

Furthermore, the execution interval determiner 20 may determine not only the execution interval for the second image processing, but also up to the execution time when the acquisition timing is near.

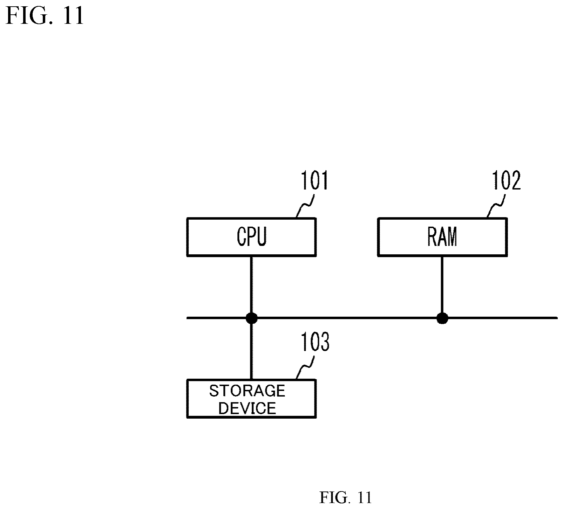

FIG. 11 is a block diagram illustrating the hardware configuration of the information processing device 100. As illustrated in FIG. 11, the information processing device 100 includes a CPU 101, a RAM 102, a storage device 103, and the like. The CPU (Central Processing Unit) 101 is a central processing unit. The RAM (Random Access Memory) 102 is a volatile memory that temporarily stores programs executed by the CPU 101 and data processed by the CPU 101. The storage device 103 is a nonvolatile storage device. The storage device 103 may be, for example, a ROM (Read Only Memory), a solid state drive (SSD), such as a flash memory, or a hard disk driven by a hard disk drive. The CPU 101 executes the determination program stored in the storage device 103, and functions of each part of the information processing device 100 are realized. The functions of each part of the information processing device 100 may be made up of a dedicated circuit or the like.

In the above-mentioned embodiment, the first image processor 30 is an example of a calculator configured to, when acquiring a plurality of first images in a time series photographed by a first camera every first time and a plurality of second images in a time series photographed by a second camera every second time, calculate a trajectory of a person that is in each of the first images and a trajectory of a person that is in each of the second images. The execution interval determiner 20 is an example of a determiner configured to determine a third time according to a time for acquiring each of the first images from the first camera and a time for acquiring each of the second images from the second camera. The second image processor 70 is an example of a judger configured to judge whether a person whose trajectory is calculated from an image of the plurality of first images corresponding to the third time after determined and a person whose trajectory is calculated from an image of the plurality of second images corresponding to the third time after determined are the same.

The above-described embodiment is a preferred example of the present invention. However, the present disclosure is not limited to this, and various modifications can be made without departing from the scope of the present invention.

### Description of Symbols

- 10: Image acquirer
- 20: Execution interval determiner
- 30: First image processor
- 40: Image storage
- 50: Queue
- 60: Image extractor
- 70: Second image processor
- 100: Information processing device
- 200: Camera
- 300: Biometric authentication system

## Claims

1. A determination method **characterized in that** a computer executes a process including:
when a plurality of first images in a time series photographed by a first camera every first time and a plurality of second images in a time series photographed by a second camera every second time are acquired, calculating a trajectory of a person that is in each of the first images and a trajectory of a person that is in each of the second images;
determining a third time according to a time for acquiring each of the first images from the first camera and a time for acquiring each of the second images from the second camera; and
judging whether a person whose trajectory is calculated from an image of the plurality of first images corresponding to the third time after determined and a person whose trajectory is calculated from an image of the plurality of second images corresponding to the third time after determined are the same.

2. The determination method as claimed in claim 1,
**characterized in that** a longer oner of the first time and the second time is determined as the third time.

3. The determination method as claimed in claim 1,
**characterized in that** a longer one of a time interval for acquiring each of the first images from the first camera and a time interval for acquiring each of the second images from the second camera is determined as the third time.

4. The determination method as claimed in any of claims 1 to 3,
**characterized in that**, when calculating the trajectory from the plurality of first images and the plurality of second images, the trajectory is calculated by extracting images so that the time interval is shorter than the third time for at least one of the plurality of first images and the plurality of second images.

5. The determination method as claimed in any of claims 1 to 3,
**characterized in that**, when calculating the trajectory from the plurality of first images and the plurality of second images, images are extracted so that the more people in an image the shorter the time interval, and the trajectory is calculated, for at least one of the plurality of first images and the plurality of second images.

6. A determination program **characterized by** causing a computer to execute a process including:
when a plurality of first images in a time series photographed by a first camera every first time and a plurality of second images in a time series photographed by a second camera every second time are acquired, calculating a trajectory of a person that is in each of the first images and a trajectory of a person that is in each of the second images;
determining a third time according to a time for acquiring each of the first images from the first camera and a time for acquiring each of the second images from the second camera; and
judging whether a person whose trajectory is calculated from an image of the plurality of first images corresponding to the third time after determined and a person whose trajectory is calculated from an image of the plurality of second images corresponding to the third time after determined are the same.

7. The determination program as claimed in claim 6,
**characterized in that** a longer oner of the first time and the second time is determined as the third time.

8. The determination program as claimed in claim 6,
**characterized in that** a longer one of a time interval for acquiring each of the first images from the first camera and a time interval for acquiring each of the second images from the second camera is determined as the third time.

9. The determination program as claimed in any of claims 6 to 8,
**characterized in that**, when calculating the trajectory from the plurality of first images and the plurality of second images, the trajectory is calculated by extracting images so that the time interval is shorter than the third time for at least one of the plurality of first images and the plurality of second images.

10. The determination program as claimed in any of claims 6 to 8,
**characterized in that**, when calculating the trajectory from the plurality of first images and the plurality of second images, images are extracted so that the more people in an image the shorter the time interval, and the trajectory is calculated, for at least one of the plurality of first images and the plurality of second images.

11. An information processing device **characterized by** comprising:
a calculator configured to, when acquiring a plurality of first images in a time series photographed by a first camera every first time and a plurality of second images in a time series photographed by a second camera every second time, calculate a trajectory of a person that is in each of the first images and a trajectory of a person that is in each of the second images;
a determiner configured to determine a third time according to a time for acquiring each of the first images from the first camera and a time for acquiring each of the second images from the second camera; and
a judger configured to judge whether a person whose trajectory is calculated from an image of the plurality of first images corresponding to the third time after determined and a person whose trajectory is calculated from an image of the plurality of second images corresponding to the third time after determined are the same.

12. The information processing device as claimed in claim 11,
**characterized in that** the determiner determines a longer oner of the first time and the second time as the third time.

13. The information processing device as claimed in claim 11,
**characterized in that** the determiner determines a longer one of a time interval for acquiring each of the first images from the first camera and a time interval for acquiring each of the second images from the second camera as the third time.

14. The information processing device as claimed in any of claims 11 to 13,
**characterized in that**, the calculator, when calculating the trajectory from the plurality of first images and the plurality of second images, calculates the trajectory by extracting images so that the time interval is shorter than the third time for at least one of the plurality of first images and the plurality of second images.

15. The information processing device as claimed in any of claims 11 to 13,
**characterized in that**, the calculator, when calculating the trajectory from the plurality of first images and the plurality of second images, extracts images so that the more people in an image the shorter the time interval, and calculates the trajectory, for at least one of the plurality of first images and the plurality of second images.
